Europäisches Patentamt

European Patent Office

Office européen des brevets

(19)

(11) Numéro de publication : **0 466 600 A1**

## (12) DEMANDE DE BREVET EUROPEEN

(21) Numéro de dépôt : **91401944.3**

(22) Date de dépôt : **11.07.91**

(51) Int. Cl.$^5$ : **C08B 37/16, C11B 3/00**

(30) Priorité : **13.07.90 FR 9008968**

(43) Date de publication de la demande :
**15.01.92 Bulletin 92/03**

(84) Etats contractants désignés :
**BE DE IT NL**

(71) Demandeur : **MONSERBIO**
**25 Faubourg des Balmettes**
**F-74000 Annecy (FR)**

(72) Inventeur : **Courregelongue, Jean**
**3, rue du Général Clémenceau**
**F-31120 Portret sur Garonne (FR)**

(74) Mandataire : **Polus, Camille et al**
**c/o Cabinet Lavoix 2, Place d'Estienne d'Orves**
**F-75441 Paris Cedex 09 (FR)**

(54) Procédé de décomposition de complexes d'inclusion de beta-cyclodextrines.

(57)   L'invention a pour objet un procédé de décomposition des complexes de β-cyclodextrine obtenus lors de l'extraction des stéroïdes des matières grasses animales et végétales pour obtenir de la β-cyclodextrine régénérée, caractérisé en ce que :

a) on met le complexe en suspension dans un milieu alcoolique de traitement comprenant un alcool de formule ROH, dans laquelle R est un groupe alkyle linéaire ou ramifié en $C_1$ à $C_4$, à une température allant de 45°C à la température de reflux du milieu ; et

b) on sépare, à température supérieure à 45°C, le solide résiduel et éventuellement on le traite à l'eau.

EP 0 466 600 A1

Jouve, 18, rue Saint-Denis, 75001 PARIS

La présente invention concerne un procédé de décomposition des complexes d'inclusion formés entre la β-cyclodextrine et les stéroïdes quand on met en oeuvre les procédés d'extraction des composés stéroïdiques contenus dans les matières grasses animales ou végétales, tels que ceux décrits dans EP-A-0278794 et EP-A-0326469.

On connait le rôle néfaste du cholestérol dans le développement des maladies cardiovasculaires et il est tout à fait souhaitable de mettre à la disposition du consommateur des aliments notamment du beurre à faible teneur en cholestérol, de saveur et d'aspect très proches des produits naturels et de prix raisonnable.

Les procédés précédemment cités permettent l'obtention de produits non dénaturés, mais leur prix de revient est assez élevé dans la mesure où les β-cyclodextrines de qualité alimentaire sont des composés coûteux qui doivent être employés en quantité non négligeable, par exemple pour le beurre concentré, à raison de 2 à 10% en poids par rapport au poids du beurre à traiter.

Il était donc souhaitable de trouver un procédé de régénération de la β-cyclodextrine, à partir des complexes formés, qui permette de recycler cet agent séquestrant. Si l'on connait diverses applications industrielles des cyclodextrines, elles impliquent, en général, leur utilisation sous forme de complexes avec les molécules incluses et aucune étude systématique de la décomposition des complexes n'a été effectuée.

On a proposé, dans Tibtech Vol 7 - Janv. 1989 - p. 2-4, pour le cas où les cyclodextrines sont introduites dans des milieux de fermentation pour séquestrer le produit formé, d'ajouter un solvant organique au milieu aqueux en fin de fermentation, pour dissocier le complexe et extraire le produit recherché; les cyclodextrines sont ensuite isolées par formation d'un clathrate avec le trichloroéthylène, le cyclohexane ou le toluène, qui précipite en milieu aqueux; ces clathrates sont décomposés par chauffage et distillation simultanée du solvant; ce procédé, complexe, ne peut être mis en oeuvre dans l'industrie alimentaire étant donné l'utilisation de solvants toxiques qu'il implique. On a aussi décrit dans US-3 491 132 la décomposition des complexes d'inclusion formés entre des acides gras et des cyclodextrines par chauffage dans un liquide et notamment dans l'eau bouillante, mais la Demanderesse a constaté qu'un tel chauffage dans l'eau chaude du complexe formé dans les procédés d'extraction des stéroïdes ne permettait pas de récupérer directement la β-cyclodextrine pure, c'est-à-dire totalement débarrassée des molécules incluses.

Selon l'invention, le procédé de séparation de la β-cyclodextrine du complexe obtenu lors de l'extraction des stéroïdes des matières grasses animales ou végétales et des oeufs consiste :

    a) à mettre le complexe en suspension dans un milieu alcoolique de traitement comprenant un alcool de formule ROH, dans laquelle R est un groupe alkyle, linéaire ou ramifié, en $C_1$ à $C_4$, à une température allant de 45°C à la température de reflux du milieu;

    b) à séparer le solide résiduel et éventuellement à éliminer du solide, l'alcool associé, par traitement à l'eau.

Le produit de départ, qui se présente sous forme d'une pâte épaisse blanche, peut contenir associé à la β-cyclodextrine du cholestérol et d'autres stéroïdes, des acides gras et des glycérides, en proportion variable suivant la matière traitée; il contient aussi une certaine proportion d'eau de 30% à 60% en poids. Lorsque le procédé d'extraction ayant conduit à la formation du complexe de départ est effectué un certain temps avant le traitement destiné à régénérer la β-cyclodextrine, le complexe est conservé de préférence à une température inférieure à 6°C ou même éventuellement, congelé à une température inférieure à -10°C.

La quantité d'alcool mise en oeuvre dans la première étape par unité de poids du complexe de départ, n'est pas critique; à titre indicatif, on peut mentionner que des suspensions de 0,2 parties à 5 parties en poids de complexe pour dix parties d'alcool conviennent, bien que l'on préfère utiliser environ 1 partie en poids du complexe pour 10 parties d'alcool. Il n'est pas nécessaire que le solvant soit anhydre ni que le complexe soit déshydraté et il peut y avoir jusqu'à 10% d'eau dans le milieu de traitement alcoolique.

Dans le cas où la β-cyclodextrine récupérée est recyclée, il est souhaitable d'utiliser des alcools dont l'emploi est admis dans l'industrie alimentaire et on préfère particulièrement utiliser l'éthanol, l'éthanol aqueux à 96%, ou un propanol notamment l'isopropanol.

La durée du traitement du complexe de départ par l'alcool dépend notamment de la température de traitement, elle est en général comprise entre 30 minutes et 4 heures, au bout desquelles les composés inclus sont dissous tandis que la majeure partie de la β-cyclodextrine, associée à des molécules d'alcool et d'eau, est insoluble et peut être séparée par filtration, de préférence à une témperature supérieure à 45°C.

Pour recycler la β-cyclodextrine dans les procédés d'élimination des stéroïdes précédemment cités, il est préférable de séparer l'alcool qui reste associé au solide isolé, après filtration.

On peut déplacer l'alcool par mise en contact du solide filtré avec de l'eau, à une température comprise entre 10°C et 30°C. On traite le solide avec la quantité minimale d'eau pour avoir une suspension agitable, sachant que la β-cyclodextrine est soluble dans l'eau à température ambiante à raison de 18g/l environ.

Après ce traitement, le solide est séparé par filtration; il peut être séché sous vide, ou recyclé tel que, en tenant compte de la quantité d'eau qu'il contient.

EXEMPLE 1

Le complexe de départ comporte en poids environ 40% de β-cyclodextrine, 3% de chlolestérol, 7% d'autres composés inclus, essentiellement des acides gras et des glycérides et 50% d'eau.

Il résulte du traitement de 100 parties en poids de beurre concentré avec 5 parties de β-cyclodextrine commerciale et 50 parties d'eau à 40°C; il a été séparé par centrifugation.

On maintient à sa température de reflux, sous agitation, durant 2 heures un mélange de 50 g de ce complexe dans 500 ml d'éthanol aqueux à 96% (V/V). Le mélange est filtré à 60°C et le solide obtenu est mis en suspension, sous agitation pendant 4 heures dans 200 ml d'eau. Il est alors isolé par filtration et séché sous vide pendant 12 heures à 70°C.

On obtient ainsi 16,5 g de β-cyclodextrine dont les caractéristiques spectrales (RMN du $C^{13}$) montrent, la disparition des composés inclus et sont conformes à celles d'une β-cyclodextrine de référence.

Un mélange contenant 100 g de beurre concentré, 5 g de β-cyclodextrine ainsi régénérée et 50 g d'eau est chauffé à 40°C pendant 5 heures. On centrifuge pour séparer la matière grasse. Celle-ci ne contient plus que 15% du cholestérol de départ.

EXEMPLE 2

On traite 100 g du même complexe de départ qu'à l'exemple 1 avec 800 ml de propanol-1 pendant 2 heures, à la température de reflux du milieu. Dans ces conditions après traitement comme à l'exemple 1, on obtient 30 g de β-cyclodextrine régénérée.

Dans les mêmes conditions opératoires, mais avec l'isopropanol, le rendement en β-cyclodextrine régénérée est identique.

A titre de comparaison, on a maintenu au reflux durant 2 heures un mélange de 150 g du même complexe de départ avec 1200 ml d'eau. Le solide isolé par filtration après refroidissement du milieu à température ambiante, est hétérogène, il contient encore des composés inclus et pèse 58 g.

EXEMPLE 3

dans un réacteur en Inox de 150 L équipé d'un condenseur, on introduit 10 kg de complexe brut (contenant 320 g de cholestérol) et 100 L d'éthanol à 4 % d'eau.

On chauffe le mélange jusqu'au reflux (78° C), et l'on maintient cette température pendant 20 minutes, puis l'on filtre la solution à chaud sur un filtre clos de 0,2 mètres carrés. Le précipité retenu sur le filtre est lavé à chaud avec 20 L d'éthanol à 4 % d'eau.

Le volume du filtrat est de 105 litres.

Le solide humide est séché pendant 48 heures en étuve ventilée à 80° C. Le poids du solide sec est de 4,95 kg; c'est de la β-cyclodextrine qui contient 0,02 % de cholestérol résiduel.

Le filtrat éthanolique contient 99,7 % de cholestérol engagé.

**Revendications**

**1** - Procédé de décomposition des complexes de β-cyclodextrine obtenus lors de l'extraction des stéroïdes des matières grasses animales et végétales pour obtenir de la β-cyclodextrine régénérée, caractérisé en ce que :

a) on met le complexe en suspension dans un milieu alcoolique de traitement comprenant un alcool de formule ROH, dans laquelle R est un groupe alkyle linéaire ou ramifié en $C_1$ à $C_4$, à une température allant de 45°C à la température de reflux du milieu; et

b) on sépare, à température supérieure à 45°C, le solide résiduel et éventuellement on le traite à l'eau.

**2** - Procédé selon la revendication 1, caractérisé en ce que le milieu alcoolique de traitement contient jusqu'à 10% d'eau.

**3** - Procédé selon l'une des revendications 1 ou 2, caractérisé en ce que l'alcool est l'éthanol ou un propanol, notamment l'isopropanol.

**4** - Procédé selon l'une des revendications 1 à 3, caractérisé en ce que l'on élimine l'alcool du solide résiduel de l'étape b par mise en contact du solide avec de l'eau, à température comprise entre 10°C et 30°C.

**Office européen des brevets**

# RAPPORT DE RECHERCHE EUROPEENNE

Numero de la demande

EP 91 40 1944

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | EP-A-0 440 539 (ROQUETTE FRERES)<br>* Document entier *<br>--- | 1-4 | C 08 B 37/16<br>C 11 B 3/00 |
| Y | DIE STÄRKE, vol. 27, no. 11, 1975, pages 368-376; J. SZEJTLI et al.: "Inclusion complexes of unsaturated fatty acids with amylose and cyclodextrin"<br>* Page 372, colonne de gauche, lignes 23-33, tableau 3 *<br>--- | 1-3 | |
| Y | FR-A-2 513 656 (RICHTER GEDEON VEGYESZETI GYAR RT et al.)<br>* Page 3, lignes 17-23,31-34; page 4, lignes 8-14 *<br>--- | 1-3 | |
| Y | DIE PHARMAZIE, vol. 44, no. 9, 1989, pages 623-625; K. KRALOVA et al.: "Interactions of beta-cyclodextrin with steroid compounds in aqueous solutions"<br>* Page 623, colonne de gauche, ligne 51 - colonne de droite, ligne 58; page 624, colonne de gauche, lignes 37-42 *<br>--- | 1-3 | |
| D,A | EP-A-0 326 469 (MONSERBIO)<br>* Document entier *<br>----- | 1 | |

**DOMAINES TECHNIQUES RECHERCHES (Int. Cl.5)**

C 08 B
C 11 B
A 23 L

**Le présent rapport a été établi pour toutes les revendications**

| Lieu de la recherche | Date d'achèvement de la recherche | Examinateur |
|---|---|---|
| LA HAYE | 17-10-1991 | MAZET J.-F. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)